# EUROPEAN PATENT SPECIFICATION

(11) **EP 3 838 622 B1**
(45) Date of publication and mention of the grant of the patent: **03.07.2024**
(21) Application number: 20214111.5
(22) Date of filing: 15.12.2020
(51) Int. Cl.: B60C 9/20

(54) **PNEUMATIC TIRE**
LUFTREIFEN
PNEUMATIQUE

(30) Priority: 17.12.2019 US 201962949109 P; 14.10.2020 US 202017070353
(43) Date of publication of application: 23.06.2021
(73) Proprietor: The Goodyear Tire & Rubber Company, Akron, OH 44316 (US)
(72) Inventor: COCCON, Marco Nicolo, L-2230 Luxembourg (LU); PASSANTE SPACCAPIETRA, Ettore, L-9070 Ettelbruck (LU); MANOGARAN, Arun Prasath, L-8715 Everlange (LU); WINKIN, Didier, B-6600 Bastogne (BE); KRIER, Roland Willibrord, L-6622 Wasserbillig (LU); MULLER, Philippe Joseph Auguste, B-6971 Champlon (BE); MAUS, Peter Cornelius, B-4760 Bullingen (BE); NAWALE, Vaibhav, L-8710 Boevange-sur-Attert (LU)
(74) Representative: Kutsch, Bernd

(56) References cited:
- EP-A1- 1 787 825
- EP-A1- 2 113 398
- EP-A1- 2 676 812
- EP-A1- 3 269 563
- EP-B1- 2 676 812
- WO-A1-2014/132667
- JP-A- 2009 184 371
- US-A- 5 746 853
- US-A1- 2013 327 467
- US-A1- 2015 251 497
- US-A1- 2016 303 915
- US-A1- 2017 087 939
- US-A1- 2018 257 436

## Description

### Field of the Invention

This invention relates to a pneumatic tire having a carcass and a belt reinforcing structure, and, more particularly, to radial ply tires for use in aircraft, trucks and other high load applications.

### Background of the Invention

The commercial truck market is moving towards an increase in overall vehicle weight, which is due in part to the increase in weight of the motor and equipment. The increase in overall vehicle weight requires a tire capable of handling the additional loading. Thus, a tire with improved crown durability and increased load carrying capacity is desired.

EP 3 269 563 A1 describes a tire in accordance with the preamble of claim 1.

Further tires having two working belts and a circumferential belt radially inwards of these working belts are known from JP 2009-184371 A, EP 1 787 825 A1, WO 2014/132667 A1, EP 2 676 812 A1, US 2015/251497 A1, US 5,746,853, US 2013/327467 A1 and EP 2 113 398 A1.

### Summary of the Invention

The invention relates to a tire in accordance with claim 1.

Dependent claims refer to preferred embodiments of the invention.

The invention provides in a first aspect a pneumatic tire comprising a tread, a carcass and a belt structure interposed between the carcass and the tread. The belt structure includes a first and second working belt which are the radially outermost belts. A low angle belt is positioned radially inward of the first and second working belts, and wherein the low angle belt has an angle less than 10 degrees. The first and second working belts are the widest belts and are formed of extensible reinforcements.

In a preferred aspect of the invention, the tire has a net to gross ratio in range of from 0.74 to 0.86, more preferably from 0.78 to 0.84.

In a preferred aspect of the invention, the tire is a truck tire or an aircraft tire.

### Definition

"Aspect ratio" of the tire means the ratio of its section height (SH) to its section width (SW) multiplied by 100% for expression as a percentage.

"Axial" and "axially" mean lines or directions that are parallel to the axis of rotation of the tire.

"Circumferential" means lines or directions extending along the perimeter of the surface of the annular tread perpendicular to the axial direction.

"Cord" means one of the reinforcement strands which the plies in the tire comprise.

"Extensible" means a reinforcement, cable or cord having a relative elongation at break of greater than 0.2% at 10% of the breaking load, when measured from the reinforcement, cable or cord extracted from a cured tire.

"Equatorial plane (EP)" means the plane perpendicular to the tire's axis of rotation and passing through the center of its tread.

"Footprint" means the contact patch or area of contact of the tire tread with a flat surface at zero speed and under normal load and pressure

"Net-to-gross ratio" means the ratio of the tire tread rubber that makes contact with the road surface while in the footprint, divided by the area of the tread in the footprint, including non-contacting portions such as grooves.

"Winding" means the pattern of the strip formed in a first revolution of the strip around a tire building drum, tire or core.

### Brief Description of the Drawings

The invention will be described by way of example and with reference to the accompanying drawings in which:
FIG. 1 illustrates a partial cross-section through the tire midplane of an exemplary radial tire of the present invention;
FIG. 2 illustrates a cross-sectional view of an embodiment of a tire belt package;
FIG. 3 illustrates a cross-sectional view of a first comparative example of a tire belt package;
FIG. 4 illustrates a cross-sectional view of a second comparative example of a tire belt package;
FIG. 5 illustrates a top view of a first embodiment of belt layup shown on a tire building drum from 0 to 360 degrees of the drum shown; and
FIG. 6 illustrates a top view of a second embodiment of belt layup shown on a tire building drum from 0 to 360 degrees of the drum shown.

### Detailed Description of Example Embodiments the Invention

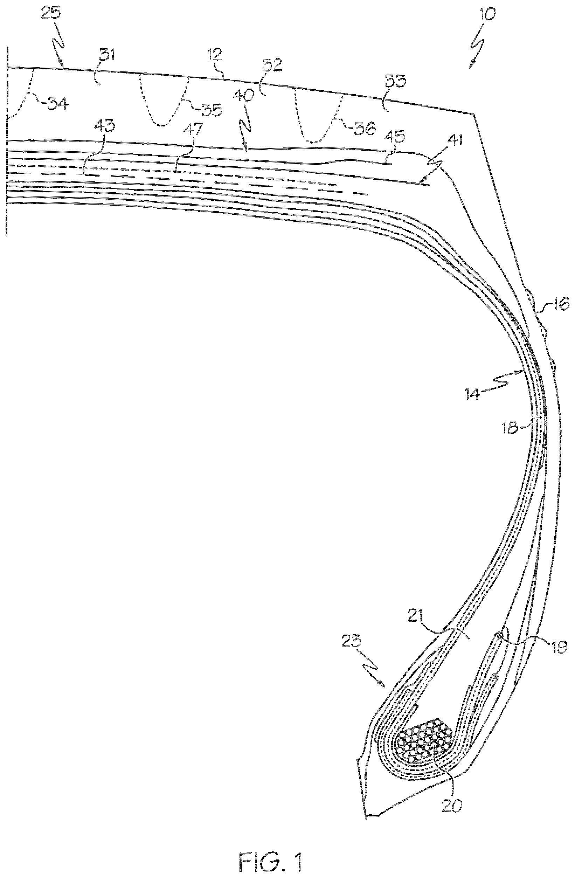

Figs. 1-2 illustrate a partial cross-section of an exemplary radial tire 10 which includes a bead portion 23 having a bead core 20 embedded therein and an apex 21, a sidewall portion 16 extending radially outward from the bead portion 23, and a cylindrical tread portion 25 extending between radially outer ends of the sidewall portions 16. The tread 25 preferably includes a plurality of ribs 31, 32 and shoulder lugs 33 with optional grooves 34, 35, 36 located between the ribs. The tire 10 preferably includes an inner liner 14 and is reinforced by one or more carcass plies 18 toroidally extending from one bead portion 23 to the other bead portion (not shown). The one or more carcass plies 18 are preferably anchored to the bead core 20 and for example, may wind around each bead core 20 from inside of the tire 10 away from the equatorial plane EP to form a turnup portion 19. A belt reinforcement package 40 is arranged between the one or more carcass plies 18 and the tread portion 25.

The belt reinforcement package 40, according to an example embodiment of the present invention, includes a first and second working belt, 41, 45. The first working belt 41 is the radially innermost belt of the two working belts and is preferably the widest belt of the belt reinforcement package 40. The first working belt 41 has a belt width substantially equal to the tread arc width or in a range of from 95 to 105 percent of the tread arc width.

The belt angle (also called breaker angle) of the first working belt 41 is between 12 and 45 degrees, preferably with a left orientation, more preferably in the range of from 19 to 30 degrees.

The belt angles are measured with respect to the circumferential direction.

The second working belt 45 is located radially outward of the first working belt 41 and is preferably the radially outermost belt of the belt package 40.

The second working belt 45 preferably has a width in the range of 70% to 90% of the tread arc width.

The second working belt 45 has a belt angle between 12 and 45 degrees, preferably with a right orientation, more preferably in the range of 19 to 30 degrees.

The second working belt 45 is preferably made of or reinforced with the same wire or cord as belt 41. The reinforcement wires or cords in the first and second working belts 41, 45 preferably have the same construction and/or the same but opposite angular orientation.

The first and second working belts 41, 45 are preferably reinforced by steel or steel cords.

The % elongation at 10% of breaking load of the first and second working belts 41, 45, i. e. the reinforcement cords or wires in these working belts 41, 45, preferably ranges from 0.18 to 1.26.

Preferably, the working belts 41, 45 are formed of extensible reinforcements so that the reinforcements have a % elongation at 10% of breaking load is greater than 0.2. The % elongation is measured on a cord extracted from a vulcanized tire.

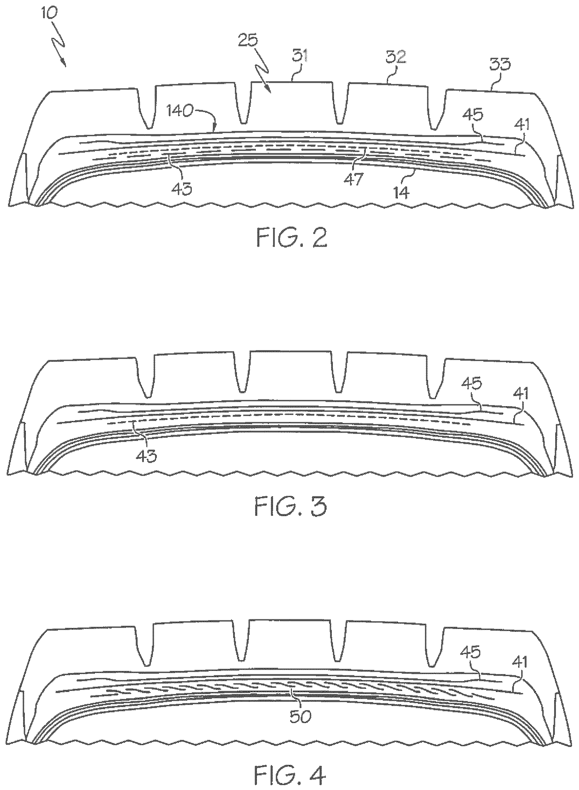

As shown in the comparative example of FIG. 3, the belt package 40 additionally includes a single or first relatively low angle belt 43, that is preferably helically wound from a strip and has a belt angle of less than 10 degrees, and more preferably less than 5 degrees.

The first relatively low angle belt 43 is preferably located radially inward of both of the first and second working belts 41, 45.

The first low angle belt 43 preferably is narrower in axial width than the first working belt 41 and the second working belt 45. Preferably, the first low angle belt 43 is the narrowest belt.

The first low angle belt 43 is preferably formed from a reinforced strip of one or more cords, wherein the width of the strip is in the range of 3 to 20 mm, and more preferably in the range of 3 to 8 mm. The first low angle belt structure may be formed from using any of the patterns as further described below.

As shown in Figs. 1-2, the belt package 40 further includes a second relatively low angle belt 47 in addition to said first relatively low angle belt 43.

The second relatively low angle belt 47 is positioned between the first working belt 41 and the first relatively low angle belt 43.

The second relatively low angle belt 47 has a width narrower than the first working belt 41 and the first low angle belt 43.

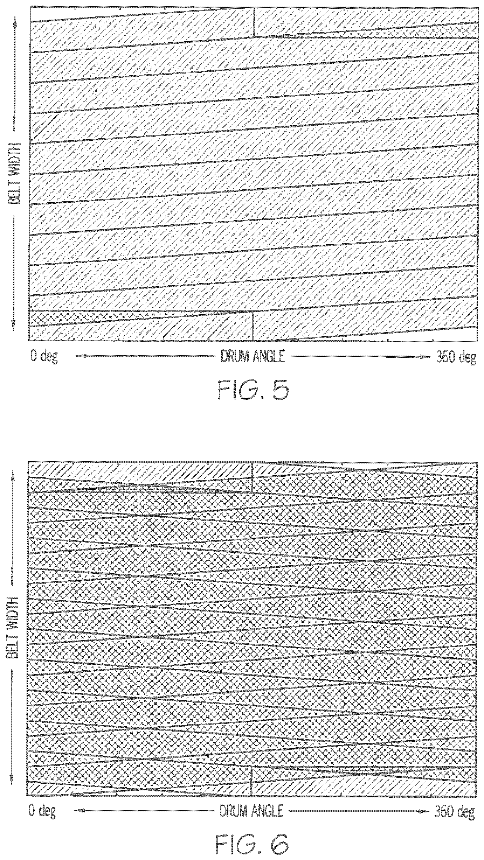

An embodiment of a belt layup for the first low angle belt 43 is shown in Fig. 5. Fig. 5 illustrates the belt formation on the tire building drum which is shown as flat for illustration purposes, from 0 to 360 degrees. This pattern spirally winds a rubberized strip of one or more parallel cords on a tire building drum or former. Preferably, the strip uses at least three parallel reinforcement cords, and preferably has a strip width of 3 to 30 mm, and more particularly 5 to 7 mm. The first relatively low angle belt 43 is formed by starting the strip at a first drum end or left shoulder of the tire building drum at a zero degree angle with the circumferential direction, wherein the strip laterally shifts over one strip width after 360 degrees rotation of the drum. The strip is then wound on the drum as the drum rotates to the opposite shoulder or side of the drum. The strips may be wound with a gap between windings or overlapped. The strip may be wound in such a manner to form a single or double layer forming a low angle belt. Fig. 4 illustrates as a comparative example a double layer of a low angle belt 50 wherein the strips are overlapped as they are wound on the tire building drum.

A second embodiment of the relatively low angle belt 43 construction is shown in Fig. 6. Fig. 6 illustrates the belt formation on the tire building drum which is shown as flat for illustration purposes, from 0 to 360 degrees. Starting at the center line of the drum, a strip of reinforcement cords is wrapped onto the building drum to the right shoulder of the drum at a first angle, wherein the first angle is less than 10 degrees with the circumferential direction. The strip is then wound from the first shoulder to the second shoulder of the drum at a second angle, wherein the second angle is negative and less than 10 degrees with the circumferential direction, and then back to the center. Thus, the strip is wound from one shoulder to the other shoulder in a zigzag manner, wherein the angle of the strip is less than 10 degrees. A positive gap or spacing may be placed in between consecutive adjacent segments of the strip, acting like a separator.

The belt width of the first relatively low angle belt 43 is in the range of from 70% to 80% of the tread arc width, and preferably in the range of from 73 to 77 %.

The first relatively low angle belt 43 may be steel or steel reinforced respectively and may be formed of relatively high elongation reinforcements or extensible reinforcements. The reinforcements may be a high elongation construction such as, for example, 3x 7x 0.22 high elongation steel (HE), and having an EPI (ends per 2.54 cm) of 14 for instance.

The high elongation steel or wire preferably has a % elongation at 10% of the breaking load ranging from 1.7- 2.05 % for a bare, green cord.

The high elongation steel or wire preferably has a % elongation at 10% of the breaking load ranging from 0.45 - 0.68 % when taken from cured tire.

Another example of a cord construction suitable for the invention is made of steel having a 4x7x.26 HE construction, with an EPI of 18.

The aspect ratio of the tire described above may vary. The aspect ratio is preferably in the range of from 45 to 90 or from 50 to 90.

Preferably, the tire has a net to gross ratio in the range of from 0.70 to 0.90, more preferably in the range of from 0.74 to 0.86. Most preferably, it is in the range of from 0.78 to 0.84.

Preferably, the tire is a truck tire.

## Claims

1. A pneumatic tire comprising a tread (25), a carcass (18) and a belt structure (40) interposed between the carcass (18) and the tread (25), wherein the belt structure (40) includes a first working belt (41) and a second working belt (45), wherein the second working belt (45) is located radially outward of the first working belt (41), wherein a first relatively low angle belt (43) is positioned radially inward of the first working belt (41), wherein the first relatively low angle belt (43) has an angle of less than 10 degrees or less than 5 degrees with respect to the circumferential direction, wherein the first working belt (41) has an axial width in range of from 95 to 105 percent of the tread arc width of the tire (10), wherein the tire (10) further comprises a second relatively low angle belt (47), the second relatively low angle belt (47) having an angle of less than 10 degrees or less than 5 degrees with respect to the circumferential direction, and wherein the second relatively low angle belt (47) is narrower in axial width than the first and second working belt (41, 45), has a width narrower than the first relatively low angle belt (43) and is positioned between the first working belt (41) and the first relatively low angle belt (43), **characterized in that** the second working belt (45) has an axial width in a range of from 85 to 95 percent of the axial width of the first working belt (41), and **in that** the axial width of the first relatively low angle belt (43) and/or the second relatively low angle belt (47) is in a range of from 70 to 80 percent, of the tread arc width.

2. The pneumatic tire of claim 1 wherein the first working belt (41) and the second working belt (45) is formed of or comprises reinforcements that are extensible in the sense that these reinforcements have a relative elongation at break of greater than 0.2% at 10% of the breaking load, when measured from the reinforcement extracted from a cured tire.

3. The pneumatic tire of claim 1 or 2 wherein the angle of the first and second working belts (41, 45) with respect to the circumferential direction each ranges from 12 degrees to 45 degrees, preferably 12 to 35 degrees or 19 to 30 degrees.

4. The pneumatic tire of claim 1, 2 or 3 wherein the first working belt (41) has an axial width equal to the tread arc width of the tire (10) or has an axial width in range of from 97 to 101 percent of the tread arc width of the tire (10).

5. The pneumatic tire of at least one of the previous claims wherein the second working belt (45) has an axial width in a range of from 70 to 90 percent of the tread arc width.

6. The pneumatic tire of at least one of the previous claims wherein the first relatively low angle belt (43) is narrower in axial width than the first and the second working belt (41, 45) and/or is the axially narrowest belt of the belt structure (40).

7. The pneumatic tire of at least one of the previous claims further comprising a third working belt.

8. The pneumatic tire of claim 7 wherein the third working belt is the radially outermost or the radially innermost belt of the belt structure (40).

9. The pneumatic tire of claim 7 or 8 wherein the third working belt is formed of or comprises reinforcements that are extensible in the sense that these reinforcements have a relative elongation at break of greater than 0.2% at 10% of the breaking load, when measured from the reinforcement extracted from a cured tire.

10. The pneumatic tire of at least one of the previous claims wherein the first and second working belts (41, 45) are integrally formed with the first relatively low angle belt (43).

11. The pneumatic tire of at least one of the previous claims wherein the second relatively low angle belt (47) is formed by a helically wound strip.

12. The pneumatic tire of at least one of the previous claims wherein the first relatively low angle belt (43) is formed by a helically wound strip,

13. The pneumatic tire of at least one of the previous claims wherein the axial width of the first relatively low angle belt (43) and/or the second relatively low angle belt (47) is in a range of from 73 to 77 percent of the tread arc width.

## Patentansprüche

1. Luftreifen, der eine Lauffläche (25), eine Karkasse (18) und eine Gürtelstruktur (40), die zwischen der Karkasse (18) und der Lauffläche (25) angeordnet ist, umfasst, wobei die Gürtelstruktur (40) einen ersten Arbeitsgürtel (41) und einen zweiten Arbeitsgürtel (45) aufweist, wobei der zweite Arbeitsgürtel (45) radial außerhalb des ersten Arbeitsgürtels (41) angeordnet ist, wobei ein erster Gürtel (43), der einen relativ kleinen Winkel bildet, radial innerhalb des ersten Arbeitsgürtels (41) angeordnet ist, wobei der erste Gürtel (43), der einen relativ kleinen Winkel bildet, einen Winkel von weniger als 10 Grad oder weniger als 5 Grad in Bezug auf die Umfangsrichtung aufweist, wobei der erste Arbeitsgürtel (41) eine axiale Breite in einem Bereich von 95 bis 105 Prozent der Breite des Bogens der Lauffläche des Reifens (10) aufweist, wobei der Reifen (10) ferner einen zweiten Gürtel (47), der einen relativ kleinen Winkel bildet, umfasst, wobei der zweite Gürtel (47), der einen relativ kleinen Winkel bildet, einen Winkel von weniger als 10 Grad oder weniger als 5 Grad in Bezug auf die Umfangsrichtung aufweist, und wobei der zweite Gürtel (47), der einen relativ kleinen Winkel bildet, in der axialen Breite schmaler ist als der erste und zweite Arbeitsgürtel (41, 45), eine schmalere Breite als der erste Gürtel (43), der einen relativ kleinen Winkel bildet, aufweist und zwischen dem ersten Arbeitsgürtel (41) und dem ersten Gürtel (43), der einen relativ kleinen Winkel bildet, angeordnet ist, **dadurch gekennzeichnet, dass** der zweite Arbeitsgürtel (45) eine axiale Breite in einem Bereich von 85 bis 95 Prozent der axialen Breite des ersten Arbeitsgürtels (41) aufweist, und dass die axiale Breite des ersten Gürtels (43), der einen relativ kleinen Winkel bildet, und/oder des zweiten Gürtels (47), der einen relativ kleinen Winkel bildet, eine axiale Breite in einem Bereich von 85 bis 95 Prozent der axialen Breite des ersten Arbeitsgürtels (41) aufweist.

2. Luftreifen nach Anspruch 1, wobei der erste Arbeitsgürtel (41) und der zweite Arbeitsgürtel (45) aus Verstärkungen gebildet sind oder Verstärkungen umfassen, die in dem Sinne dehnbar sind, dass diese Verstärkungen eine relative Bruchdehnung von mehr als 0,2 % bei 10 % der Bruchlast aufweisen, wenn sie an der aus einem vulkanisierten Reifen extrahierten Verstärkung gemessen wird.

3. Luftreifen nach Anspruch 1 oder 2, wobei der Winkel des ersten und zweiten Arbeitsgürtels (41, 45) in Bezug auf die Umfangsrichtung jeweils in einem Bereich von 12 Grad bis 45 Grad, vorzugsweise von 12 bis 35 Grad oder von 19 bis 30 Grad liegt.

4. Luftreifen nach Anspruch 1, 2 oder 3, wobei der erste Arbeitsgürtel (41) eine axiale Breite aufweist, die gleich der Breite des Bogens der Lauffläche des Reifens (10) ist oder eine axiale Breite in einem Bereich von 97 bis 101 Prozent der Breite des Bogens der Lauffläche des Reifens (10) aufweist.

5. Luftreifen nach mindestens einem der vorhergehenden Ansprüche, wobei der zweite Arbeitsgürtel (45) eine axiale Breite in einem Bereich von 70 bis 90 Prozent der Breite des Bogens der Lauffläche aufweist.

6. Luftreifen nach mindestens einem der vorhergehenden Ansprüche, wobei der erste Gürtel (43), der einen relativ kleinen Winkel bildet, eine geringere axiale Breite aufweist als die des ersten und des zweiten Arbeitsgürtel (41, 45) und/oder der axial schmalste Gürtel der Gürtelstruktur (40) ist.

7. Luftreifen nach mindestens einem der vorhergehenden Ansprüche, der ferner einen dritten Arbeitsgürtel umfasst.

8. Luftreifen nach Anspruch 7, wobei der dritte Arbeitsgürtel der radial äußerste oder der radial innerste Gürtel der Gürtelstruktur (40) ist.

9. Luftreifen nach Anspruch 7 oder 8, wobei der dritte Arbeitsgürtel aus Verstärkungen gebildet ist oder Verstärkungen umfasst, die in dem Sinne dehnbar sind, dass diese Verstärkungen eine relative Bruchdehnung von mehr als 0,2 % bei 10 % der Bruchlast aufweisen, wenn sie an der aus einem vulkanisierten Reifen extrahierten Verstärkung gemessen wird.

10. Luftreifen nach mindestens einem der vorhergehenden Ansprüche, wobei der erste und der zweite Arbeitsgürtel (41, 45) einstückig mit dem ersten Gürtel (43), der einen relativ kleinen Winkel bildet, ausgebildet sind.

11. Luftreifen nach mindestens einem der vorhergehenden Ansprüche, wobei der zweite Gürtel (47), der einen relativ kleinen Winkel bildet, durch einen schraubenförmig gewickelten Streifen gebildet ist.

12. Luftreifen nach mindestens einem der vorhergehenden Ansprüche, wobei der erste Gürtel (43), der einen relativ kleinen Winkel bildet, durch einen schraubenförmig gewickelten Streifen gebildet wird.

13. Luftreifen nach mindestens einem der vorhergehenden Ansprüche, wobei die axiale Breite des ersten Gürtels (43), der einen relativ kleinen Winkel bildet, und/oder des zweiten Gürtels (47), der einen relativ kleinen Winkel bildet, in einem Bereich von 73 bis 77 Prozent der Breite des Bogens der Lauffläche liegt.

## Revendications

1. Bandage pneumatique qui comprend une bande de roulement (25), une carcasse (18) et une structure de ceintures (40) intercalée entre la carcasse (18) et la bande de roulement (25) ; dans lequel la structure de ceintures (40) comprend une première ceinture de travail (41) et une deuxième ceinture de travail (45) ; dans lequel la deuxième ceinture de travail (45) est située, dans la direction radiale, à l'extérieur de la première ceinture de travail (41) ; dans lequel une première ceinture (43) formant un angle relativement petit est située, dans la direction radiale, à l'intérieur de la première ceinture de travail (41) ; dans lequel la première ceinture (43) formant un angle relativement petit forme un angle inférieur à 10 degrés ou inférieur à 5 degrés par rapport à la direction circonférentielle ; dans lequel la première ceinture de travail (41) possède une largeur axiale qui se situe dans une plage qui représente de 95 à 105 pour cent de la largeur d'arc de la bande de roulement du bandage pneumatique (10) ; dans lequel le bandage pneumatique (10) comprend en outre une deuxième ceinture (47) formant un angle relativement petit, la deuxième ceinture (47) formant un angle relativement petit formant un angle inférieur à 10 degrés ou inférieur à 5 degrés par rapport à la direction circonférentielle ; et dans lequel la deuxième ceinture (47) formant un angle relativement petit possède une largeur axiale inférieure à celle de la première et de la deuxième ceinture de travail (41, 45), possède une largeur inférieure à celle de la première ceinture (43) formant un angle relativement petit et est située entre la première ceinture de travail (41) et la première ceinture (43) formant un angle relativement petit, **caractérisé en ce que** la deuxième ceinture de travail (45) possède une largeur axiale qui se situe dans une plage qui représente de 85 à 95 pour cent de la largeur axiale de la première ceinture de travail (41), et **en ce que** la largeur axiale de la première ceinture (43) formant un angle relativement petit et/ou de la deuxième ceinture (47) formant un angle relativement petit se situe dans une plage qui représente de 70 à 80 pour cent de la largeur d'arc de la bande de roulement.

2. Bandage pneumatique selon la revendication 1, dans lequel la première ceinture de travail (41) et la deuxième ceinture de travail (45) sont constituées par ou comprennent des renforcements qui sont extensibles dans le sens où ces renforcements possèdent un allongement relatif à la rupture supérieur à une valeur qui représente de 0,2 % à 10 % de la charge de rupture, lorsqu'on le mesure à partir du renforcement extrait d'un bandage pneumatique vulcanisé.

3. Bandage pneumatique selon la revendication 1 ou 2, dans lequel l'angle formé par la première et la deuxième ceinture de travail (41, 45), par rapport à la direction circonférentielle, se situe respectivement dans la plage de 12 degrés à 55 degrés, de préférence de 12 à 35 degrés ou de 19 à 30 degrés.

4. Bandage pneumatique selon la revendication 1, 2 ou 3, dans lequel la première ceinture de travail (41) possède une largeur axiale qui est égale à la largeur d'arc de la bande de roulement du bandage pneumatique (10) ou possède une largeur axiale qui se situe dans une plage qui représente de 97 à 101 pour cent de la largeur d'arc de la bande de roulement du bandage pneumatique (10).

5. Bandage pneumatique selon au moins une des revendications précédentes, dans lequel la deuxième ceinture de travail (45) possède une largeur axiale qui se situe dans une plage qui représente de 70 à 90 pour cent de la largeur d'arc de la bande de roulement.

6. Bandage pneumatique selon au moins une des revendications précédentes, dans lequel la première ceinture (43) formant un angle relativement petit possède une largeur axiale inférieure à celle de la première et de la deuxième ceinture de travail (41, 45) et/ou représente la ceinture la plus étroite, dans la direction axiale, de la structure de ceintures (40).

7. Bandage pneumatique selon au moins une des revendications précédentes, qui comprend en outre une troisième ceinture de travail.

8. Bandage pneumatique selon la revendication 7, dans lequel la troisième ceinture de travail représente la ceinture la plus externe, dans la direction radiale, ou la plus interne, dans la direction radiale, de la structure de ceintures (40).

9. Bandage pneumatique selon la revendication 7 ou 8, dans lequel la troisième ceinture de travail est constituée par ou comprend des renforcements qui sont extensibles où ces renforcements possèdent un allongement relatif à la rupture supérieur à une valeur qui représente de 0,2 % à 10 % de la charge de rupture, lorsqu'on le mesure à partir du renforcement extrait d'un bandage pneumatique vulcanisé.

10. Bandage pneumatique selon au moins une des revendications précédentes, dans lequel la première et la deuxième ceinture de travail (41, 45) sont réalisées en une seule pièce avec la première ceinture (43) formant un angle relativement petit.

11. Bandage pneumatique selon au moins une des revendications précédentes, dans lequel on obtient la deuxième ceinture (47) formant un angle relativement petit par l'intermédiaire d'une bande que l'on enroule de manière hélicoïdale.

12. Bandage pneumatique selon au moins une des revendications précédentes, dans lequel on obtient la première ceinture (43) formant un angle relativement petit par l'intermédiaire d'une bande que l'on enroule de manière hélicoïdale.

13. Bandage pneumatique selon au moins une des revendications précédentes, dans lequel la largeur axiale de la première ceinture (43) formant un angle relativement petit et/ou de la deuxième ceinture (47) formant un angle relativement petit se situe dans une plage qui représente de 73 à 77 pour cent de la largeur de la bande de roulement.
